**Europäisches Patentamt**

**European Patent Office**

**Office européen des brevets**

(19)

(11) Veröffentlichungsnummer: **0 019 250 B1**

(12) # EUROPÄISCHE PATENTSCHRIFT

(45) Veröffentlichungstag der Patentschrift:
01.12.82

(51) Int. Cl.³: **H 04 Q 11/04,** H 04 M 11/06

(21) Anmeldenummer: **80102605.5**

(22) Anmeldetag: **10.05.80**

(54) Schaltungsanordnung für mit PCM-Anschlussleitungen verbundene Fernsprechapparate.

(30) Priorität: **16.05.79 DE 2919618**

(43) Veröffentlichungstag der Anmeldung:
**26.11.80 Patentblatt 80/24**

(45) Bekanntmachung des Hinweises auf die Patenterteilung:
**01.12.82 Patentblatt 82/48**

(84) Benannte Vertragsstaaten:
**AT BE CH FR GB IT LI NL**

(73) Patentinhaber: **Telefonbau und Normalzeit GmbH, Mainzer Landstrasse 128-146 Postfach 4432, D-6000 Frankfurt (Main) (DE)**

(72) Erfinder: **Agricola, Manfred, Dipl.-Ing., Rhönstrasse 15, D-6368 Bad Vilbel (DE)**
Erfinder: **Kessler, Arthur, Ing.-grad., Mauerfeldstrasse 4, D-6370 Oberursel 5 (DE)**
Erfinder: **Reinhold, Andreas, Jägerstrasse 9, D-6457 Maintal 3 (DE)**
Erfinder: **Schmid, Adolf, Ing.-grad., Hammarskjöldring 27, D-6000 Frankfurt 50 (DE)**

(56) Entgegenhaltungen:

DE-A-2 348 681
DE-A-2 619 391
DE-A-2 621 603
DE-A-2 629 449
DE-A-2 643 703
DE-B-2 729 689
US-A-4 070 551
US-A-4 122 308
1978 INTERNATIONAL ZÜRICH SEMINAR ON DIGITAL COMMUNICATIONS, 7-9 März 1978, IEEE, New York, US,
W.E. HEROLD et al.: «Components, structure and operation of integrated digital networks based on an experimental system», Seiten B7.1 bis B7.6

(56) Entgegenhaltungen:

INTERNATIONAL SWITCHING SYMPOSIUM 25-29 Oktober 1976, IECE of Japan Tokyo, JP G.N. LAWRENCE et al.: «Design philosophies for local digital switching», Seiten 231-1-1 bis 231-1-7
1978 INTERNATIONAL ZÜRICH SEMINAR ON DIGITAL COMMUNICATIONS, 7-9 März 1978, IEEE, New York, US,
R. TORBERGSEN: «A digital subscriber set», Seiten D2.1 bis D2.4
THE INTERNATIONAL SYMPOSIUM ON SUBSCRIBER LOOPS AND DEVICES, 20-24 März 1978, IEEE New York, US,
R. MONTEMURRO et al.: «Design philosophy of future digital integrated networks», Seiten 150 bis 155

## Schaltungsanordnung für mit PCM-Anschlussleitungen verbundene Fernsprechapparate

Die Erfindung betrifft eine Schaltungsanordnung für mit PCM-Anschlussleitungen verbundene Fernsprechapparate, in denen die auf einer zweiadrigen ferngespeisten, zu einer PCM-Vermittlungsanlage führende Anschlussleitung im Vollduplexverkehr übertragene digitale Sprachinformation mittels in einem Codex zusammengefasster Einrichtungen in bei kommender Richtung analoge Werte umgesetzt und bei gehender Richtung aus analogen Werten gebildet wird, und in denen Steuereinrichtungen Signalisierungsinformationen empfangen und verarbeiten.

Die Pulscodemodulation wird in der Übertragungstechnik und in der Vermittlungstechnik angewendet, wobei die Sprachsignale in Form digitalisierter Abtastproben gesendet und empfangen werden. Diese Abtastproben werden entsprechend dem Shannon'schen Abtasttheorem mit einer Folge entnommen, die doppelt so hoch ist wie die höchste zu übertragende Frequenz. Dabei wird von jeder Abtastprobe der analoge Amplitudenwert in ein binär codiertes Wort umgewandelt. Die Codierung erfolgt dabei nach einer sogenannten Kompandierungskennlinie wonach je nach Stufenhöhe eine unterschiedliche Bemessung vorgenommen wird. Ein derartiges Codewort besteht entsprechend einer internationalen Normung aus 8 Bit, die seriell innerhalb eines Kanals gesendet werden.

Die Pulscodemodulation wurde anfangs hauptsächlich auf Übertragungsstrecken und in Vermittlungsanlagen angewendet, wo grössere Informationsmengen zu übertragen oder zu vermitteln sind.

Dies war insbesondere eine wirtschaftliche Frage, weil die erforderlichen Wandler wegen ihres relativ hohen Preises nicht jedem Anschluss einzeln zugeordnet werden konnten. In der Zwischenzeit sind solche Wandler durch Anwendung der integrierten Schaltkreistechnik preiswert geworden, so dass die technischen Möglichkeiten von wirtschaftlichen Gegebenheiten nicht mehr beeinflusst werden.

Es ist bereits bekannt, die Codewandler einem Anschluss in Form eines sogenannten Codex fest zuzuordnen, so dass ein solcher Anschluss zur Vermittlungsanlage hin digital arbeitet. Wird die Codex-Einrichtung im Anschlussorgan also innerhalb der Anlage eingebaut, so wird auf der Anschlussleitung die Sprachinformation im Niederfrequenzband übertragen, und ein herkömmlicher Fernsprechapparat ist anschliessbar.

Inzwischen sind auch Anordnungen bekannt geworden, bei denen die Anschlussleitung in die PCM-Übertragung einbezogen wird, und die Codex-Einrichtungen im Fernsprechapparat eingebaut sind. Schaltungsanordnungen dieser Art sind beispielsweise dargestellt in der DE-A-23 48 681 (Fig. 2) und in der DE-A-26 21 603. In diesen Schriften werden hauptsächlich Signalisierungsverfahren für die Kennzeichengabe behandelt.

Innerhalb des Apparates sind zu diesem Zweck neben den Codex-Einrichtungen auch Steuereinrichtungen für den Empfang und die Auswertung von Kennzeichen vorgesehen. Diese Teilnehmerstationen sind über jeweils eine PCM-Leitung mit der Vermittlungsanlage direkt oder über einen Konzentrator verbunden.

Mit herkömmlichen Fernsprechapparaten ist es auf einfache Art möglich, an eine Anschlussleitung einen Zweitapparat anzuschliessen, so dass Gespräche von verschiedenen Stellen aus geführt werden können. Weitere Möglichkeiten zur Verbesserung des Fernsprechkomforts an einer Teilnehmeranschlussleitung bestehen darin, dass Apparate über einen sogenannten Zwischenstellen-Umschalter oder als Chef-Sekretäranlage zusammengeschaltet werden. Die dafür benötigten Schalteinrichtungen werden bei den Apparaten selbst, also in der Peripherie, angeordnet, so dass in der Vermittlungsanlage keine zusätzlichen Aufwendungen entstehen. Um die notwendigen Teilverbindungen herzustellen, genügt es bei im Niederfrequenzband durchgeschalteten Verbindungen, einfach die Anschlussleitung umzuschalten oder die Verbindungsleitung durchzuschalten.

Um solche Schaltmassnahmen auch bei PCM-Anschlussleitungen auf einfache Art durchführen zu können, hat sich die Erfindung zur Aufgabe gestellt, eine Schaltungsanordnung vorzustellen, mit der es möglich ist, Teilnehmerapparate direkt zusammenzuschalten.

Die Lösung dieser Aufgabe geschieht entsprechend den im kennzeichnenden Teil des Hauptanspruches gemachten Angaben.

Mit diesen im Apparat selbst untergebrachten Einrichtungen ist es möglich, einen Zweitapparat in gleicher Weise anzuschiessen, wie es bei herkömmlichen Anschlussleitungen bekannt ist. Darüber hinaus besteht die Möglichkeit zwei Apparate zu einer Vorzimmeranlage oder wie ein Zwischenstellenumschalter zusammenzuschalten, ohne dass zusätzliche Schalteinrichtungen ausserdem erforderlich sind.

Gemäss den weiteren Ausbildungen der Erfindung können weitere Zusatzeinrichtungen sowohl an die Hauptleitung als auch an die Nebenleitung angeschlossen werden.

Ein Ausführungsbeispiel der Erfindung wird nachfolgend anhand von Zeichnungen näher erläutert.

Es zeigt:
Fig. 1 ein vereinfachtes Prinzipschaltbild,
Fig. 2 die Zusammenschaltung der Funktionsgruppen.

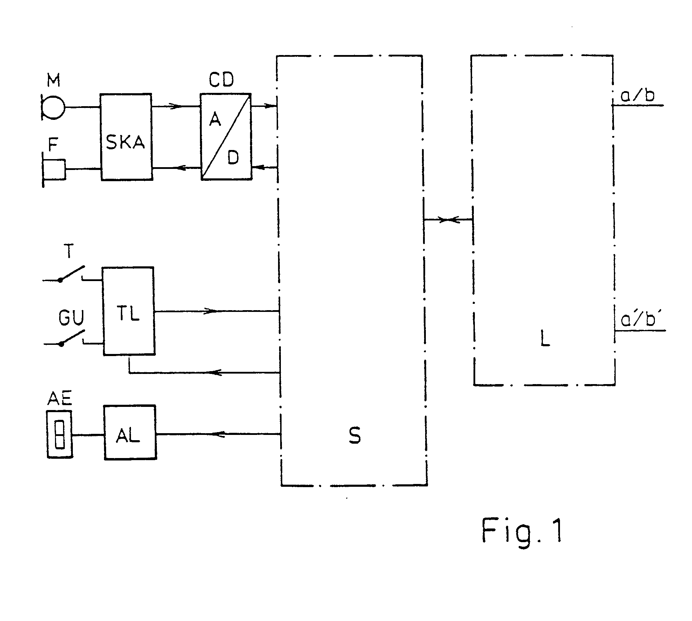

In der Fig. 1 ist der Stromlaufplan eines Fernsprechapparates schematisch dargestellt, der an eine digitale Anschlussleitung angeschlossen ist. Die mit einer Vermittlungseinrichtung verbundene Anschlussleitung a/b und die zu einem weiteren Anschluss führende Verbindungsleitung a'/b' enden in einer Leitungsanschaltung L. Von dieser Leitungsanschaltung führen Steuer- und Verbindungsleitungen zur Steuereinrichtung S. Für den Austausch der Sprachinformation ist an die Steuereinrichtung ein Codex CD angeschlossen. Diese Einrichtung besteht in bekannter Weise aus einem Digital/Analog- und einem Analog/Digital-Wandler. Über die Sprechkreisanordnung SKA sind Mikrofon M und Fernhörer F angeschlossen. Die Schaltungsanordnung enthält weiterhin eine Tastenlogik TL, über die das Betätigen von am Apparat befindlichen Tasten, einschliesslich des Gabelumschaltekontaktes GU, erkannt und der Steuereinrichtung S zugeleitet wird. Es ist weiterhin eine Anzeigelogik AL vorgesehen, über die von der Leitung kommende Signale decodiert und mit einer einfachen Anzeigeeinrichtung AE angezeigt werden können.

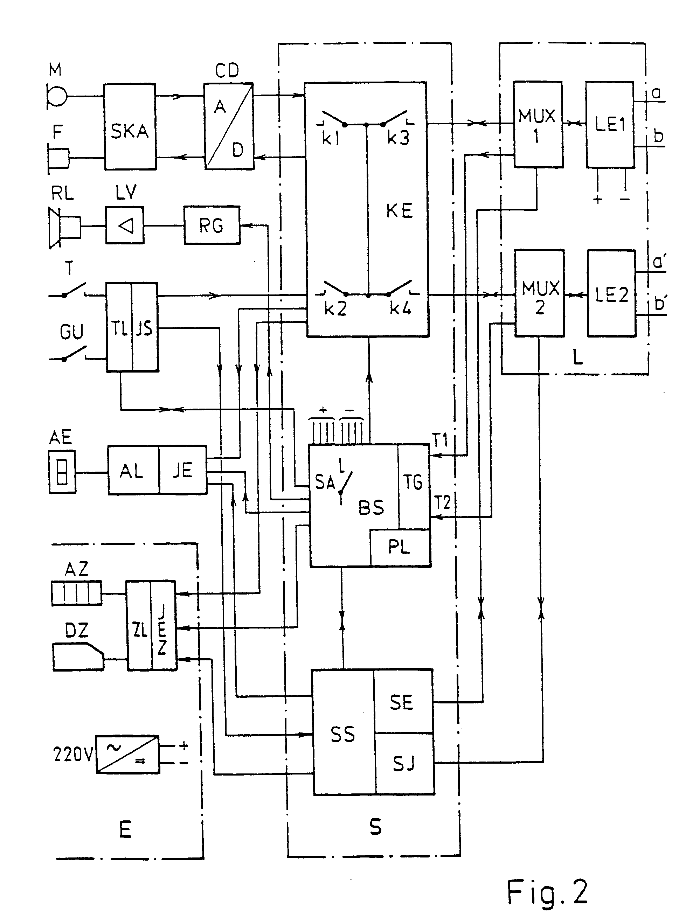

Die Fig. 2 zeigt im Detail die Zusammenschaltung der einzelnen Funktionseinheiten der gesamten Schaltungsanordnung. Die Leitungsanschaltung L besteht pro Leitung aus einer Leitungsendeinrichtung LE1, LE2 und Multiplexeinrichtung MUX1, MUX2. In den Multiplexeinrichtungen werden aus den ankommenden Taktsignalen in bekannter Weise Steuertakte T1, T2 gewonnen, sowie die Signalisier-Information von der Sprachinformation getrennt.

Die in Fig. 1 dargestellte Steuereinrichtung S besteht aus einer Koppeleinrichtung KE aus einer Betriebszustandssteuerung BS und einer Signalsteuerungseinrichtung SS. Die Koppeleinrichtung KE ermöglicht, wie dargestellt, sprechwegemässige Verbindungen zwischen der Anschlussleitung a/b und der Sprechgarnitur des Apparates, zwischen der Verbindungsleitung a'/b' und der Sprechgarnitur des Apparates, sowie eine Direktverbindung zwischen der Anschlussleitung a/b und der Verbindungsleitung a'/b'. Ausserdem besteht noch eine Verbindungsmöglichkeit von Tastenlogik TL bzw. mit der Anzeigelogik zu den vorher erwähnten Leitungen. Entsprechend der jeweils gewünschten Verbindung werden die Wege innerhalb der Koppeleinrichtung KE digital durchgeschaltet, so wie dies mit den Kontakten k1 bis k4 dargestellt ist.

Die Einstellinformation für die Koppeleinrichtung KE wird in der Betriebszustandssteuerung BS erzeugt und der Koppeleinrichtung mitgeteilt. Die Betriebszustandssteuerung ist taktgesteuert und erhält die erforderlichen Steuertakte T1, T2 über die Multiplexeinrichtungen der Leitungen zugeführt. Mit einem innerhalb der Betriebszustandssteuereinrichtung angeordneten Taktgeber TG werden alle erforderlichen Takte erzeugt. Neben der Logik für die Steuerung aller Betriebsmerkmale des Apparates enthält die Betriebszustandssteuerung noch eine Schalteinrichtung SA, mit der es möglich ist, einzelne Bauelemente vorübergehend von der Stromversorgung abzuschalten, wenn diese aufgrund des gerade herrschenden Betriebszustandes nicht benötigt werden. Weiterhin ist eine Prüflogik PL vorgesehen, womit aufgrund von Befehlen, die über die Leitungen eingegeben werden, Prüfverbindungen aller Art geschaltet werden können.

Die Steuereinrichtung S enthält ausserdem die Signalsteuerungseinrichtung SS, die von den Leitungen kommende Signalisierungsinformationen aufnimmt und entweder direkt verarbeitet und an Anzeigeeinrichtungen weitergibt oder in Zusammenarbeit mit der Betriebszustandssteuerung BS die notwendigen Schaltmassnahmen bewirkt. Zu den Leitungen hin beinhaltet die Signalsteuerungseinrichtung SS eine Signalisierungseinrichtung extern SE, die mit der Multiplexeinrichtung MUX1 der Anschlussleitung a/b verbunden ist. Die entsprechende, der Verbindungsleitung a'/b' zugeordnete Signalisierungseinrichtung intern SI ist der Multiplexeinrichtung MUX2 zugeordnet. Die Signalsteuerungseinrichtung SS empfängt Signalisierungsinformation von den Leitungen und leitet sie an Anzeigelogik oder Zusatzlogik zum Zwecke der Anzeige oder zur weiteren Verarbeitung in Datenendgeräten weiter. Ebenso wird in umgekehrter Richtung vom Teilnehmeranschluss oder entsprechenden Zusatzgeräten kommende Information verarbeitet und in die betreffende Leitung als Signalinformation eingespeist.

Die Grundausstattung eines Fernsprechapparates gemäss der Erfindung enthält eine Tastenlogik TL, die mit einer Informationssendeeinrichtung IS verbunden ist. Ebenso gehört dazu eine Anzeigelogik AL, die mit einer Informationsempfangseinrichtung IE verbunden ist. Von der Betriebszustandssteuerung BS wird die Tastenlogik laufend angesteuert, um das Betätigen einer Taste oder des Gabelumschalters zu erkennen. Die dabei gewonnene Information wird entweder als digitalisierte Tonfrequenz über die Koppeleinrichtung KE oder als Binär-Signal über die Signalsteuerungseinrichtung SS zur Leitung hin abgegeben. Die Informationsempfangseinrichtung IE für die Anzeigelogik empfängt entweder über die Koppeleinrichtung KE digitalisierte, im Sprachkanal befindliche Information oder über die Signalsteuerungseinrichtung SS von den Multiplexern abgeleitete binäre Signalinformation.

Darüber hinaus ist noch eine Zusatzlogik ZL vorgesehen, die mit einer Informationsempfangseinrichtung IEZ verbunden ist. Da in der Standardausführung nur eine einziffrige Anzeige vorgesehen ist, kann durch diese Zusatzeinrichtung der Anschluss von mehrziffrigen Anzeigen sowie Zusatzgeräten aller Art ermöglicht werden. Für diese Ergänzungsausstattung ist eine besondere Stromversorgung vorgesehen.

Anhand einiger Betriebsfunktionen soll nun das Zusammenwirken der einzelnen Funktionseinheiten näher erläutert werden.

Wenn der Teilnehmer seinen Hörer abnimmt, wird das Betätigen des Gabelumschaltekontaktes GU von der Betriebszustandssteuerung BS

erkannt. Es wird daraufhin je nach Signalisierungsart entweder ein Weg über die Koppeleinrichtung KE zur Anschlussleitung a/b geschaltet, wobei ein den geschlossenen Kontakten k2 und k3 entsprechender Weg durchgeschaltet wird. oder es erfolgt eine Signalisierung über die Signalsteuerungseinrichtung SS, die Signalisierungseinrichtung SE und die Multiplexeinrichtung MUX1 zur Leitung hin. Wenn daraufhin von der Vermittlungsstelle ein Signal zur Wahlaufnahmebereitschaft zurück gesendet wird, so wird dieses in der Signalisierungssteuerung aufgenommen und der Betriebszustandssteuerung mitgeteilt. Es besteht nun die Möglichkeit, dass der Wählton innerhalb des Apparates in bekannter Weise erzeugt wird oder dass in der Koppeleinrichtung KE ein dem Schliessen der Kontakte k1 und k3 entsprechender Weg geschaltet wird, auf dem der digitalisierte Wählton von der Vermittlungsstelle her durchgeschaltet wird. Sobald der Teilnehmer eine Wähltaste betätigt, wird dies in der Betriebszustandssteuerung BS erkannt. Falls die Wahlinformation in Form von digitalisierten Tonfrequenzen abgegeben werden soll, wird innerhalb der Koppeleinrichtung KE der Kontakt k1 geöffnet und der Kontakt k2 geschlossen. Die Informationssendeeinrichtung IS gibt daraufhin die digitalisierte Wahlinformation innerhalb des Sprachkanals zur Anschlussleitung a/b ab. Es besteht aber auch die Möglichkeit, dass die Wahlinformation binär codiert der Signalsteuerungseinrichtung SS zugeführt wird. Hier diese Information so umcodiert, dass sie ausserhalb des Sprachkanals im Überrahmen der PCM-Übertragung über die Multiplexeinrichtung MUX1 weitergeleitet werden kann.

Falls der Teilnehmer mit der ersten Ziffer, die er wählt, zu erkennen gibt, dass er eine Verbindung zur Anschlussleitung a'/b' wünscht, so wird dies ebenfalls in der Betriebszustandssteuerung erkannt. Es wird daraufhin innerhalb der Koppeleinrichtung KE über den Kontakt k1 und k4 eine Verbindung zu dieser Leitung hergestellt. Der Kontakt k3 wird dabei geöffnet. Ausserdem wird die Signalsteuerungseinrichtung veranlasst, ein besonderes Signal für die Anschlussleitung a/b zu erzeugen, das über die Multiplexeinrichtung MUX1 zur Leitung hin übertragen wird. Damit wird der Vermittlungseinrichtung mitgeteilt, dass dieser Anschluss weiterhin besetzt ist, dass aber andererseits keine weitere Wahlinformation mehr zu erwarten ist. Daraufhin kann die Vermittlungseinrichtung den Wahlempfänger abschalten und den Anschluss als besetzt kennzeichnen.

Wenn ein Anruf zu diesem Anschluss erfolgt, so wird dieser in Form eines Signalisierungswortes von der Signalisierungseinrichtung SE zunächst empfangen. Innerhalb der Signalisierungseinrichtung wird dieser Befehl decodiert und der Betriebszustandssteuerung BS mitgeteilt. Die Betriebszustandssteuerung schaltet daraufhin den Rufgenerator RG und den Lautverstärker LV ein, so dass der Teilnehmer den Anruf über den Ruflautsprecher RL wahrnehmen kann. Die Meldung des Teilnehmers wird erkannt wie vorher beschrieben, und es wird dann in der Koppeleinrichtung KE eine Verbindung zu der rufenden Leitung hergestellt. Dies kann wie eingangs beschrieben die externe Anschlussleitung a/b oder die interne Verbindungsleitung a'/b' sein. Die Signalsteuerungseinrichtung SS teilt dies in entsprechender Weise der Betriebszustandssteuerung BS mit.

Wenn der Teilnehmer während einer Gesprächsverbindung durch Betätigen einer Sondertaste zu erkennen gibt, dass er eine Rückfrage zu der jeweils anderen Leitung einleiten möchte, so wird dies ebenfalls zunächst von der Betriebszustandssteuerung BS erkannt. Innerhalb der Koppeleinrichtung KE wird dann die neue Verbindung durchgeschaltet und die bisher bestehende Verbindung aufgetrennt. Ausserdem wird der neu zu belegenden Leitung ein Signalisierungswort von der Signalsteuerungseinrichtung zugesendet. Wie bei der herkömmlichen Technik bekannt, werden Rückfrage und Makelvorgänge ohne Unterschied zu den bekannten Bedienungs- und Funktionsweisen verwirklicht.

Sollte die Verbindungsleitung a'/b' abgehend oder durch einen Anruf über die Anschlussleitung a/b belegt werden, so wird dies anhand des auf der betreffenden Leitung einlaufenden Signals, das von den Signalisierungseinrichtungen SE bzw. SI empfangen wird, innerhalb der Signalsteuerungseinrichtung SS erkannt. Es wird daraufhin der Betriebszustandssteuerung BS ein Befehl gegeben, womit diese in der Koppeleinrichtung KE durch Schliessen der Kontakte k3 und k4 eine Verbindung der Anschlussleitung a/b mit der Verbindungsleitung a'/b' herstellt. Bei dieser Gelegenheit wird auch von der Betriebszustandssteuerung aus die Anzeigeeinrichtung AE eingeschaltet. Es wird zu diesem Zweck ein Codewort in die Anzeigelogik AL gegeben, wodurch an der einstelligen Anzeigeeinrichtung AE ein bestimmtes Symbol erscheint. Damit wird der Teilnehmer darüber informiert, dass die Leitung besetzt ist.

Die einstellige Anzeigeeinrichtung kann ausserdem beispielsweise dafür benutzt werden, um dem Teilnehmer bei einer abgehenden Verbindung Auskunft über die erreichte Gebührenzone zu geben. Es könnte ausserdem angezeigt werden, dass der Teilnehmer durch Betätigen einer Sondertaste eine Rufumleitung vorgenommen hat.

Eine Rufumleitung, wie sie auch bei herkömmlichen kleinen Nebenstellen- oder Vorzimmeranlagen bekannt ist, wird beim Betätigen der entsprechenden Taste innerhalb der Betriebszustandssteuerung BS gespeichert. Wenn in diesem Zustand, der wie schon gesagt in der Anzeigeeinheit AE angezeigt wird, ein Anruf auf der Anschlussleitung a/b eintrifft, so wird das entsprechende Signal in der Signalisierungseinrichtung SE empfangen und an die Signalisierungseinrichtung SI weitergeleitet. Die

Betriebszustandssteuerung stellt daraufhin beim Melden des an der Verbindungsleitung a'/b' angeschlossenen Teilnehmers oder eines Zusatzgerätes eine Verbindung innerhalb der Koppeleinrichtung KE zwischen den beiden Leitungen her.

Wenn der Apparat mit einer Ergänzungseinrichtung E ausgestattet ist, so ergeben sich weitere zusätzliche Kommunikationsmöglichkeiten. Die Ergänzungseinrichtung E, die eine eigene Stromversorgung besitzt, gestattet es, mehrziffrige Anzeigen AZ, zusätzliche Druckeinrichtungen DZ und andere hier nicht dargestellte nützliche Zusatzeinrichtungen anzuschliessen. Zu diesem Zweck ist eine Zusatzlogik ZL vorgesehen, die eine Informationsempfangseinrichtung IEZ enthält. Diese Einrichtung kann über die Leitungen im Sprachkanal einlaufende Signale empfangen und auswerten. Ausserdem sind von der Betriebszustandssteuerung kommende Einstellbefehle möglich, womit dem Teilnehmer mit dem mehrziffrigen Anzeigefeld AZ oder einer anderen Wiedergabeeinrichtung Betriebszustände kenntlich gemacht werden können. Es ist auch möglich, die von den Leitungen kommenden Informationen als Signalisierungsinformation zu empfangen und innerhalb der Signalsteuerungseinrichtung SS zu verarbeiten und an die Ergänzungseinrichtung E weiterzugeben.

Mit der innerhalb der Betriebszustandssteuerung BS enthaltenen Prüflogik PL lassen sich durch Befehle, die über die Leitungen gegeben werden, Prüfstromkreise aller Art schalten. Es ist auf diesem Weg beispielsweise möglich, durch Herstellen einer Verbindung von der Tastenlogik über die in der Koppeleinrichtung KE geschalteten Kontakte k1 und k3 zwecks Prüfung der Tastenfunktionen und der Tastenlogik eine Verbindung zur Anschlussleitung a/b zu schalten. Auch die Anzeige- und anderen Wiedergabeeinrichtungen können mit Hilfe der Prüflogik getestet werden.

**Patentansprüche**

1. Schaltungsanordnung für mit PCM-Anschlussleitungen verbundene Fernsprechapparate, in denen die auf einer zweiadrigen ferngespeisten, zu einer PCM-Vermittlungsanlage führende Anschlussleitung (a/b) im Vollduplexverkehr übertragene digitale Sprachinformation mittels in einem Codex (CD) zusammengefasster Einrichtungen in bei kommender Richtung analoge Werte umgesetzt und bei gehender Richtung aus analogen Werten gebildet wird, und in denen Steuereinrichtungen (S) Signalisierungsinformationen empfangen und verarbeiten, dadurch gekennzeichnet, dass neben den im Fernsprechapparat befindlichen, für den Empfang und für die Verarbeitung von auf den Anschlussleitungen (a/b) ankommenden und abgehenden Signalisierungsinformationen vorgesehenen Steuereinrichtungen (S) eine digitalisierte Sprachsignale oder Tonsignale im Duplexverkehr durchschaltende, ebenfalls im Fernsprechapparat befindliche Koppeleinrichtung (KE) vorgesehen ist, die wahlweise Verbindungen ermöglicht zwischen dem im gleichen Fernsprechapparat befindlichen Codex (CD) oder einer Informationssendeeinrichtung (IS) oder -empfängseinrichtung (IE) und der einzigen zu der Vermittlungsanlage führenden Anschlussleitung (a/b) oder einer zu einem weiteren Fernsprechapparat führenden Verbindungsleitung (a'/b') sowie zwischen der Anschlussleitung (a/b) und der Verbindungsleitung (a'/b'), wobei diese Koppeleinrichtung (KE) von einer Betriebszustandssteuerung (BS) entsprechend den von der Anschlussleitung (a/b) oder der Verbindungsleitung (a'/b') über eine jeweils zugeordnete Signalisierungssteuerung (SE, SI) oder von den Bedienungselementen (z. B. Tasten T, Gabelumschaltekontakten GU) des Fernsprechapparates kommenden Befehlen eingestellt wird.

2. Schaltungsanordnung nach Anspruch 1, dadurch gekennzeichnet, dass der Betriebszustandssteuerung (BS) mit den über die Anschlussleitung (a/b) und die Verbindungsleitung (a'/b') zugeführten Steuertakten (T1, T2) mitgeteilt wird, ob der Fernsprechapparat einen direkten Anschluss über die Anschlussleitung (a/b) zu der Vermittlungsanlage hat oder ob ausschliesslich der weitere Fernsprechapparat über die Verbindungsleitung (a'/b') an die Vermittlungsanlage angeschlossen ist, und dass mit dieser Information die Art der Durchschaltung in der Koppeleinrichtung (KE) beeinflusst wird.

3. Schaltungsanordnung nach Anspruch 2, dadurch gekennzeichnet, dass von der Betriebszustandssteuerung (BS) eine Tastenlogik (TL) dauernd angesteuert wird, um den Schaltzustand des Gabelumschaltekontaktes (GU) ebenso wie das Betätigen einer Wähl- oder Sondertaste abzufragen, wobei die entstehenden Befehle sowohl als digitalisierte Tonfrequenzen als auch als binär codierte Signale abgegeben werden.

4. Schaltungsanordnung nach Anspruch 3, dadurch gekennzeichnet, dass die digitalisierten Tonfrequenzen innerhalb des Sprachkanals über die Koppeleinrichtung (KE) der jeweils angeschalteten Leitung (Verbindungsleitung a'/b', Anschlussleitung a/b) zugeführt werden.

5. Schaltungsanordnung nach Anspruch 3, dadurch gekennzeichnet, dass die binär codierten Signale über den jeweils der Anschlussleitung (a/b) oder der Verbindungsleitung (a'/b') zugeordneten Teil der Signalisierungssteuerung (SE,SI) der jeweils angeschalteten Anschlussleitung (a/b) oder Verbindungsleitung (a'/b') zugeführt werden.

6. Schaltungsanordnung nach einem der Ansprüche 1 bis 3, dadurch gekennzeichnet, dass die zum Normalbetrieb mindestens erforderlichen Einrichtungen wie Codex (CD), Koppeleinrichtung (KE), Betriebszustandssteuerung (BS), Tastenlogik (TL) über die ferngespeiste Anschlussleitung (a/b) mit Strom versorgt werden, und dass die Steuereinrichtung (S) Logikanordnungen enthält, die aufgrund der Betriebszustände gerade nicht benötigte Einzelschaltkreise von dieser Stromversorgung abschalten.

7. Schaltungsanordnung nach Anspruch 1, dadurch gekennzeichnet, dass eine Anzeigelogik (AL) vorgesehen ist, die Einstellsignale entweder über die Koppeleinrichtung (KE) oder über die Signalisierungssteuerung (SE,SI) empfängt und an einer einstelligen Anzeigeeinrichtung (AE) anzeigt.

8. Schaltungsanordnung nach Anspruch 7, dadurch gekennzeichnet, dass der Fernsprechapparat mit einer Ergänzungseinrichtung (E) für z. B. mehrstellige Anzeigen (AZ), Lesegeräte, Lautsprecher versehen ist, die eine zusätzliche Stromversorgung besitzt und über eine Zusatzlogik (ZL) von Signalen gesteuert wird, die über die Koppeleinrichtung (KE) und/oder über die Signalisierungssteuerung (SE, SI) zugeführt werden.

9. Schaltungsanordnung nach Anspruch 1, dadurch gekennzeichnet, dass die Betriebszustandssteuerung (BS) Logikanordnungen enthält zur Erzeugung und Zählung von Gebührenimpulsen und dass der Gebührenwert in Einheiten und/oder Geldbeträgen angezeigt und/oder ausgedruckt wird.

10. Schaltungsanordnung nach Anspruch 9, dadurch gekennzeichnet, dass die Information über das Zählintervall von der Vermittlungsanlage im PCM-Kanal übertragen wird.

11. Schaltungsanordnung nach Anspruch 9, dadurch gekennzeichnet, dass das Zählintervall anhand der gewählten Rufnummer innerhalb der Steuereinrichtung (S) errechnet wird.

12. Schaltungsanordnung nach Anspruch 1, dadurch gekennzeichnet, dass die Betriebszustandssteuerung (BS) eine Prüflogik (PL) enthält, mit deren Hilfe durch über eine Leitung gesendete Befehle Verbindungen innerhalb der Koppeleinrichtung (KE) für Mess- und Prüfvorgänge hergestellt werden können.

**Revendications**

1. Montage pour appareils téléphoniques, reliés par les lignes MIC (modulation par impulsions codées), dans lesquels l'information numérique traduisant la parole, transmise entièrement en duplex par une ligne de raccordement (a/b) à deux conducteurs, alimentée à distance et menant à un central MIC est convertie, par des dispositifs groupés dans un codeur-décodeur (CD), en signaux analogiques à l'arrivée et formée, au départ, à partir de signaux analogiques, et dans lesquels des dispositifs de commande (S) reçoivent et traitent des informations de signalisation, caractérisé en ce que, outre les dispositifs de commande (S) qui se trouvent dans l'appareil téléphonique et qui servent à recevoir et à traiter des informations de signalisation arrivant et partant par les lignes de branchement (a/b), il y a, également, dans l'appareil téléphonique, un dispositif de couplage (KE) qui fait passer en duplex les signaux de parole numérisés ou autres signaux acoustiques numérisés, ce dispositif permettant au choix des liaisons entre le codeur-décodeur (CD) qui se trouve dans le même appareil téléphonique ou un dispositif d'émission d'informations (IS) ou de réception d'information (IE) et la seule ligne de branchement (a/b) allant au central ou une ligne de liaison allant à un autre appareil téléphonique (a'/b') ainsi qu'entre la ligne de branchement (a/b) et la ligne de liaison (a'/b'), ce dispositif de couplage (KE) étant réglé par une commande de modes de fonctionnement (BS) en fonction des ordres venant de la ligne de branchement (a/b) ou de la ligne de liaison (a'/b') par l'intermédiaire d'une commande de signalisation (SE, SI) correspondante ou par les organes de commande de l'appareil téléphonique (par exemple les touches T, les contacts inverseurs à fourche GU).

2. Montage selon la revendication 1, caractérisé en ce que les impulsions de commandes (T1, T2) envoyées à la commande de modes de fonctionnement (BS) par l'intermédiaire de la ligne de branchement (a/b) et de la ligne de liaison (a'/b') indiquent à cette commande (BS) si l'appareil téléphonique est relié directement au central par la ligne de branchement (a/b) ou si seul l'autre appareil l'est, par la ligne de liaison (a'/b'), et en ce que cette information influe sur le genre de la liaison qui est établie dans le dispositif de couplage (KE).

3. Montage selon la revendication 2, caractérisé en ce que la commande de modes de fonctionnement (BS) interroge en permanence un étage logique à touches (TL) sur la position du contact inverseur à fourche (GU) ainsi que sur l'actionnement d'une touche de composition de numéro ou d'une touche spéciale, les ordres produits étant délivrés aussi bien sous la forme de fréquences acoustiques numérisées que sous la forme de signaux à codage binaire.

4. Montage selon la revendication 3, caractérisé en ce que les fréquences acoustiques numérisées sont, à l'intérieur du canal de parole, amenées à la ligne utilisée dans le cas considéré (ligne de liaison a'/b', ligne de branchement a/b) par l'intermédiaire du dispositif de couplage (KE).

5. Montage selon la revendication 3, caractérisé en ce que les signaux à codage binaire sont amenés à la ligne de branchement (a/b) ou de liaison (a'/b'), attaquée dans le cas considéré, par l'intermédiaire de la partie de la commande de signalisation (SE.SI) attribué à la ligne de branchement (a/b) ou à la ligne de liaison (a'/b').

6. Montage selon l'une quelconque des revendications 1 à 3, caractérisé en ce que les dispositifs qui constituent l'équipement minimal nécessaire au fonctionnement normal, comme le codeur-décodeur (CD), le dispositif de couplage (KE), la commande de modes de fonctionnement (BS), l'étage logique à touches (TL), sont alimentés en courant par la ligne de branchement alimentée à distance (a/b), et en ce que le dispositif de commande (S) comporte des dispositifs logiques qui, sur la base des modes de fonctionnement, coupent cette alimentation pour les circuits dont on n'a pas besoin à l'instant considéré.

7. Montage selon la revendication 1, caractérisé en ce qu'il y a un étage logique d'affichage (AL) qui reçoit des signaux de réglage soit par l'intermédiaire du dispositif de couplage (KE), soit par l'intermédiaire de la commande de signalisation (SE,SI) et qui les affiche dans un dispositif d'affichage (AE) à un chiffre.

8. Montage selon la revendication 7, caractérisé en ce que l'appareil téléphonique est pourvu d'un dispositif de complément (E) pour, par exemple, l'affichage à plusieurs chiffres (AZ), les appareils de lecture, les hautparleurs, ce dispositif ayant sa propre alimentation et étant commandé, par l'intermédiaire d'un dispositif logique supplémentaire (ZL), par des signaux qui lui sont amenés par le dispositif de couplage (KE) ou par la commande de signalisation (SE,SI), ou les deux.

9. Montage selon la revendication 1, caractérisé en ce que la commande de modes de fonctionnement (BS) comprend des dispositifs logiques qui produisent et comptent des impulsions de tarification, et en ce que le montant de la communication est affiché ou imprimé, ou les deux, et ce, en unités ou en somme d'argent, ou les deux.

10. Montage selon la revendication 9, caractérisé en ce que l'information concernant la progression du compteur est transmise par le central en empruntant le canal MIC.

11. Montage selon la revendication 9, caractérisé en ce que la progression du compteur est calculée à l'intérieur du dispositif de commande (S) sur la base du numéro d'appel qui a été composé.

12. Montage selon la revendication 1, caractérisé en ce que la commande de modes de fonctionnement (BS) comprend un dispositif logique de contrôle (PL) à l'aide duquel, sous l'effet d'ordres envoyés par une ligne, des liaisons peuvent être établies à l'intérieur du dispositif de couplage (KE), pour des opérations de mesure et de contrôle.

**Claims**

1. Circuitry for telephone instruments connected to PCM- extension lines in which digital speech information transmitted via a duplex two-wire PCM-line with feeding facilities leading to a PCM-exchange is transformed into analogous values when incoming and is transformed out of analogous values when outgoing by equipment arranged inside a codec (CD) and in which control units (S) receive and compute signalling information, comprising that besides the control units (S) being inside the telephone instrument and provided for computing signalling information incoming and outgoing via the extension line (a/b), there is provided a coupling unit (KE) also being contained in the telephone instrument for switching through speech and tone signals, which selectively enables connections between the codec (CD) inside the same telephone instrument or an information sending unit (IS) or an information receiving unit (IE) and the only extension line (a/b) leading to an exchange or to a connection line (a'/b') leading to a further telephone instrument as well as connections between the extension line (a/b) and the connection line (a'/b'), whereby this coupling unit (KE) is controlled by an operation-status-control (BS) corresponding to commands coming from the extension line (a/b) or the connection line (a'/b') or coming from the operation elements, for example keys (T), hook switches (GU) of the telephone instrument.

2. Circuitry as claimed in claim 1, comprising that the operation-status-control is informed by clock pulses (T1,T2) coming via the extension line (a/b) or the connection line (a'/b') whether the telephone instrument is connected directly to the exchange via the extension line (a/b) or if only the further telephone instrument is connected via the connection line (a'/b') to the exchange and that with this information the way of switching within the coupling unit (KE) is effected.

3. Circuitry as claimed in claim 1, comprising that a key logic (TL) is permanently controlled by the operation-status-control (BS) for examining the switching status of the hook-contact (GU) as well as the operation of a dial-key or a special key, whereby the generated commands are given out in the form of digitized tone-frequency as well as in the form of binary coded signals.

4. Circuitry as claimed in claim 3, comprising that the digitized tone-frequencies are directed to the actually on line (extension line a/b or connection line a'/b') via the coupling unit (KE) within the speech channel.

5. Circuitry as claimed in claim 3, comprising that binary coded signals are directed to that part of the signalling control (SE,SI) belonging to the extension line (a/b) or the connection line (a'/b') which is actually switched on.

6. Circuitry as claimed in one of the claims 1 to 3, comprising that the units needed for basical functions (codec CD, coupling unit KE, operation-status-control BS, key control TL) get their power supply via the extension line (a/b) and that there are logic arrangements inside the control (S) that switch off single components from this power supply which are not in use according to the actual operation status.

7. Circuitry as claimed in claim 1, comprising that a display logic (AL) is provided which receives directing signals either via the coupling unit (KE) or via the signalling control (SE,SI) and shows it on a one-figure-display.

8. Circuitry as claimed in claim 7, comprising that the telephone instrument contains a supplement unit (E) for more-figure-displays (AZ), reading devices, loudspeakers which has an own additional power supply and is controlled via an accessory logic (ZL) by signals which are directed to it via the coupling unit (KE) and/or via the signalling control (SE,SI).

9. Circuitry as claimed in claim 1, comprising that the operation-status-control (BS) contains logic arrangements for generating and counting of metering pulses and that the metering value is displayed and/or printed in units and/or amount of money.

10. Circuitry as claimed in claim 9, comprising that the information about the metering interval is transmitted from the exchange via the PCM-channel.

11. Circuitry as claimed in claim 9, comprising that the metering interval is computed inside the control units (S) by evaluating the dialled numbers.

12. Circuitry as claimed in claim 1, comprising that the operation-status-control (BS) contains testing-logic-arrangements (PL) by the help of which and by commands sent via a line connections may be set up inside the coupling unit (KE) for measuring and testing processes.

Fig.1

Fig. 2